# EUROPEAN PATENT SPECIFICATION

(11) **EP 3 916 336 B1**
(45) Date of publication and mention of the grant of the patent: **10.08.2022**
(21) Application number: 21175366.0
(22) Date of filing: 21.05.2021
(51) Int. Cl.: F28D 15/02

(54) **LOOP-TYPE HEAT PIPE**
SCHLEIFENWÄRMEROHR
CALODUC DE TYPE BOUCLE

(30) Priority: 26.05.2020 JP 2020091229
(43) Date of publication of application: 01.12.2021
(73) Proprietor: SHINKO ELECTRIC INDUSTRIES CO., LTD., Nagano-shi, Nagano 381-2287 (JP)
(72) Inventor: MACHIDA, Yoshihiro, Nagano 381-2287 (JP)
(74) Representative: Zimmermann & Partner Patentanwälte mbB

(56) References cited:
- CN-A- 103 000 595
- US-A1- 2020 064 077
- US-B2- 8 705 236

## Description

### TECHNICAL FIELD

The present disclosure relates to a loop-type heat pipe according to the preamble of claim 1, as illustrated in US 8,705,236.

### BACKGROUND ART

In the related art, a heat pipe is known as a device configured to cool a heat generation component such as a CPU (Central Processing Unit) mounted on an electronic device. The heat pipe is a device configured to transport heat by using a phase change of an operating fluid.

As the heat pipe, a loop-type heat pipe including an evaporator configured to vaporize an operating fluid by heat of a heat generation component and a condenser configured to cool and condense the vaporized operating fluid where the evaporator and the condenser are connected to each other by a liquid pipe and a vapor pipe forming a loop-shaped flow path may be exemplified. In the loop-type heat pipe, the operating fluid flows in one direction in the loop-shaped flow path.

The evaporator and the liquid pipe of the loop-type heat pipe are each provided therein with a porous body, so that the operating fluid in the liquid pipe is guided to the evaporator with a capillary force generated in the porous bodies and the vapor is suppressed from flowing from the evaporator back to the liquid pipe. The porous body is formed with a plurality of pores. Each of the pores is formed as a bottomed hole formed on one surface-side of a metal layer and a bottomed hole formed on the other surface-side partially communicate with each other (for example, refer to PTLs 1 and 2).

### CITATION LIST

### PATENT DOCUMENT

[PTL 1] Japanese Patent No. 6,291,000
[PTL 2] Japanese Patent No. 6,400,240

In recent years, an amount of heat generation in a heat generation component increases as a signal processing speed is improved, so that it may be difficult to sufficiently radiate heat in the loop-type heat pipe of the related art.

### SUMMARY OF INVENTION

Aspect of non-limiting embodiments of the present disclosure is to provide a loop-type heat pipe capable of radiating more heat to an outside.

A loop-type heat pipe according to the non-limiting embodiment of the present disclosure comprises:
an evaporator configured to vaporize an operating fluid;
a first condenser and a second condenser configured to condense the operating fluid;
a first liquid pipe having a first flow path and configured to connect the evaporator and the first condenser;
a second liquid pipe having a second flow path and configured to connect the evaporator and the second condenser;
a first vapor pipe configured to connect the evaporator and the first condenser;
a second vapor pipe configured to connect the evaporator and the second condenser; and
a connecting portion configured to connect the first liquid pipe and second liquid pipe to the evaporator, the connecting portion having a first porous body configured to connect the first flow path and the second flow path,
wherein the evaporator has:
   a third flow path connected to the first liquid pipe and the first vapor pipe,
   a fourth flow path connected to the second liquid pipe and the second vapor pipe, and
   a partitioning wall configured to partition the third flow path and the fourth flow path.

According to the present disclosure, it is possible to radiate more heat to the outside.

### BRIEF DESCRIPTION OF DRAWINGS

In the following, embodiments are described without being limited thereto.
FIG. 1 is a schematic plan view depicting a loop-type heat pipe in accordance with a first embodiment.
FIG. 2 is a sectional view depicting an evaporator and a surrounding thereof of the loop-type heat pipe in accordance with the first embodiment.
FIG. 3 is a schematic plan view depicting the evaporator, a liquid pipe and a vapor pipe of the loop-type heat pipe in accordance with the first embodiment.
FIG. 4A is a sectional view exemplifying the liquid pipe of the loop-type heat pipe in accordance with the first embodiment.
FIG. 4B is a sectional view exemplifying the connecting portion of the loop-type heat pipe in accordance with the first embodiment.
FIG. 5 is a sectional view exemplifying the evaporator of the loop-type heat pipe in accordance with the first embodiment.
FIG. 6 is a schematic plan view depicting an evaporator, a liquid pipe and a vapor pipe of a loop-type heat pipe in accordance with a second embodiment.

### DESCRIPTION OF EMBODIMENTS

Hereinbelow, embodiments will be described with reference to the drawings. Note that, in the respective drawings, the same constitutional parts are denoted with the same reference signs, and the overlapping descriptions may be omitted.

### <First Embodiment>

### [Structure of Loop-Type Heat Pipe of First Embodiment]

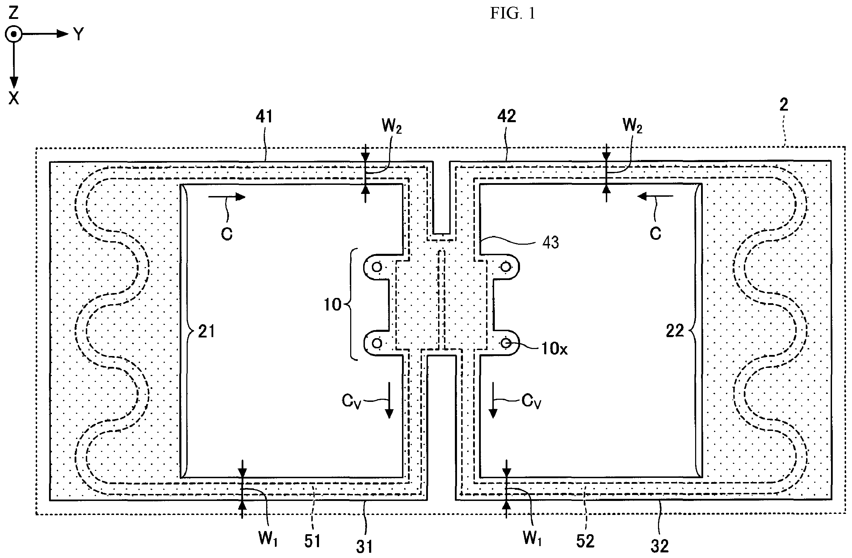

First, a structure of a loop-type heat pipe in accordance with a first embodiment is described. FIG. 1 is a schematic plan view exemplifying the loop-type heat pipe in accordance with the first embodiment.

Referring to FIG. 1, a loop-type heat pipe 1 includes an evaporator 10, a first condenser 21, a second condenser 22, a first vapor pipe 31, a second vapor pipe 32, a first liquid pipe 41, a second liquid pipe 42 and a connecting portion 43. The loop-type heat pipe 1 can be accommodated in a mobile-type electronic device 2 such as a smart phone and a tablet terminal, for example.

In the loop-type heat pipe 1, the evaporator 10 has a function of vaporizing an operating fluid C to generate vapor Cv. The first condenser 21 and the second condenser 22 each have a function of condensing the vapor Cv of the operating fluid C. The first condenser 21 and the second condenser 22 may be arranged spaced from each other. The first liquid pipe 41 is connected to the first condenser 21. The second liquid pipe 42 is connected to the second condenser 22. The evaporator 10 and the first condenser 21 are connected to each other by the first vapor pipe 31, the first liquid pipe 41, and the connecting portion 43. The evaporator 10 and the second condenser 22 are connected to each other by the second vapor pipe 32, the second liquid pipe 42 and the connecting portion 43.

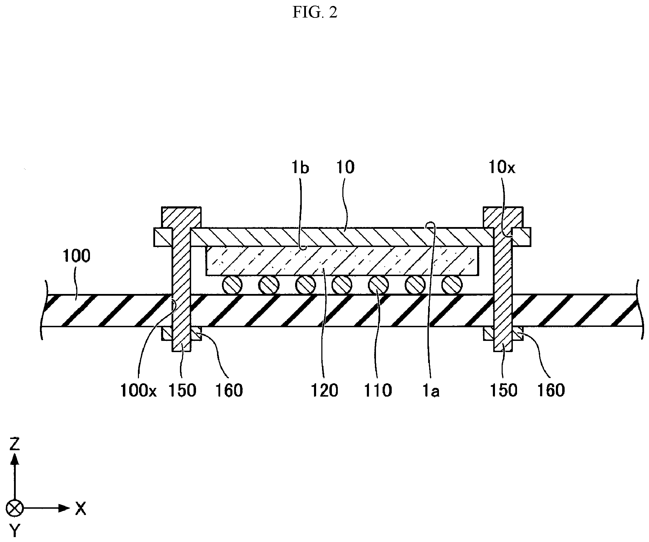

FIG. 2 is a sectional view depicting an evaporator and a surrounding thereof of the loop-type heat pipe in accordance with the first embodiment. As shown in FIGS. 1 and 2, the evaporator 10 is formed with, for example, four through-holes 10x. Bolts 150 are each inserted in each of the through-holes 10x formed in the evaporator 10 and each of through-holes 100x formed in a circuit substrate 100, and are fastened with nuts 160 from a lower surface-side of the circuit substrate 100, so that the evaporator 10 and the circuit substrate 100 are fixed to each other. The evaporator 10, the first condenser 21, the second condenser 22, the first vapor pipe 31, the second vapor pipe 32, the first liquid pipe 41, the second liquid pipe 42 and the connecting portion 43 have an upper surface 1a and a lower surface 1b opposite to the upper surface 1a.

A heat generation component 120 such as a CPU is mounted on the circuit substrate 100 by bumps 110, and an upper surface of the heat generation component 120 is closely contacted to the lower surface 1b of the evaporator 10. The operating fluid C in the evaporator 10 is vaporized by heat generated in the heat generation component 120, so that the vapor Cv is generated.

As shown in FIG. 1, the vapor Cv generated in the evaporator 10 is guided to the first condenser 21 through the first vapor pipe 31 and is condensed in the first condenser 21, and is guided to the second condenser 22 through the second vapor pipe 32 and is condensed in the second condenser 22. Thereby, heat generated in the heat generation component 120 is moved to the first condenser 21 and the second condenser 22, so that temperature rise in the heat generation component 120 is suppressed. The operating fluid C condensed in the first condenser 21 is guided to the evaporator 10 through the first liquid pipe 41 and the connecting portion 43. The operating fluid C condensed in the second condenser 22 is guided to the evaporator 10 through the second liquid pipe 42 and the connecting portion 43. A width W₁ of each of the first vapor pipe 31 and the second vapor pipe 32 may be set to about 8mm, for example. A width W₂ of each of the first liquid pipe 41 and the second liquid pipe 42 may be set to about 6mm, for example. The width W₁ of the first vapor pipe 31 may be larger than the width W₂ of the first liquid pipe 41. Furthermore, the width W₁ of the second vapor pipe 32 may be larger than the width W₂ of the second liquid pipe 42.

A type of the operating fluid C is not particularly limited. However, a fluid having a high vapor pressure and a high evaporative latent heat is preferably used so as to effectively cool the heat generation component 120 by the evaporative latent heat. Examples of such a fluid may include ammonia, water, Freon, alcohol and acetone.

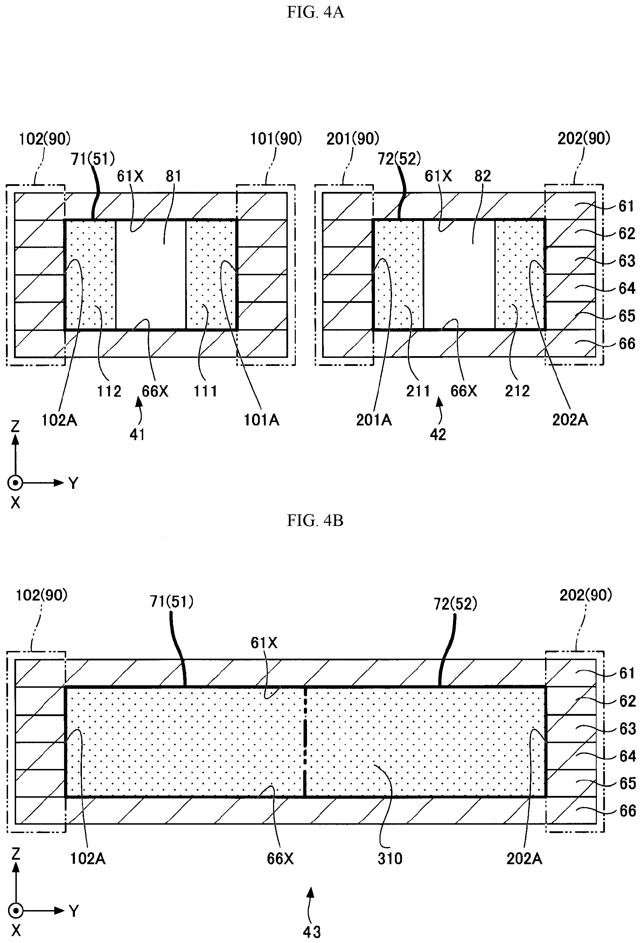

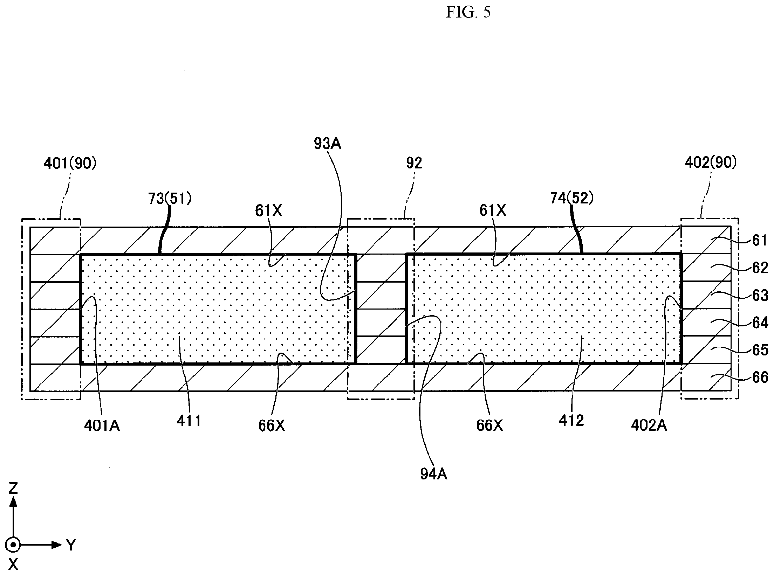

The evaporator 10, the first condenser 21, the second condenser 22, the first vapor pipe 31, the second vapor pipe 32, the first liquid pipe 41, the second liquid pipe 42 and the connecting portion 43 may each have a structure where a plurality of metal layers is stacked, for example. As described later, the evaporator 10, the first condenser 21, the second condenser 22, the first vapor pipe 31, the second vapor pipe 32, the first liquid pipe 41, the second liquid pipe 42 and the connecting portion 43 each have a structure where six layers of metal layers 61 to 66 are stacked (refer to FIGS. 4A, 4B and 5).

The metal layers 61 to 66 are copper layers having high heat conductivity, for example, and are directly bonded to each other by solid-phase bonding and the like. A thickness of each of the metal layers 61 to 66 may be set to about 50µm to 200µm, for example. Note that, the metal layers 61 to 66 are not limited to the copper layers and may be formed of stainless steel, aluminum, magnesium alloy and the like. The number of the stacked metal layers is not particularly limited. For example, five or less metal layers or seven or more metal layers may be stacked.

As used herein, the solid-phase bonding is a method of heating and softening bonding targets in a solid state without melting the same, and then further pressing, plastically deforming and bonding the bonding targets. All materials of the metal layers 61 to 66 are preferably the same so that the metal layers adjacent to each other can be favorably bonded by the solid-phase bonding.

As shown in FIGS. 4 A, 4B and 5, the evaporator 10, the first condenser 21, the second condenser 22, the first vapor pipe 31, the second vapor pipe 32, the first liquid pipe 41, the second liquid pipe 42 and the connecting portion 43 each have pipe walls 90, each of which is constituted by all the stacked metal layers 61 to 66, at both end portions in a direction orthogonal to both a flowing direction of the operating fluid C or the vapor Cv and a stacking direction of the metal layers 61 to 66.

As shown in FIG. 1, the evaporator 10, the first vapor pipe 31, the first condenser 21, the first liquid pipe 41 and the connecting portion 43 are formed with a loop-shaped flow path 51. The evaporator 10, the second vapor pipe 32, the second condenser 22, the second liquid pipe 42 and the connecting portion 43 are formed with a loop-shaped flow path 52. For example, the flow paths 51 and 52 are all surrounded by both inner wall surfaces of the two pipe walls 90, a lower surface of the metal layer 61 and an upper surface of the metal layer 66. The operating fluid C or the vapor Cv flows in the flow paths 51 and 52. As described later, parts of the flow paths 51 and 52 are provided with porous bodies, and a remaining part of the flow paths 51 and 52 is a space.

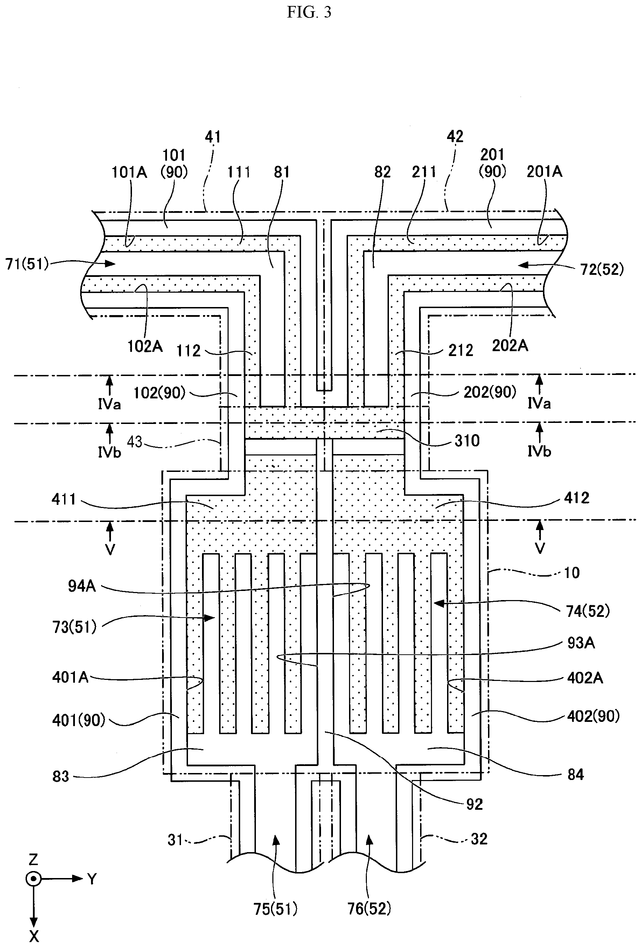

Here, structures of the evaporator 10, the first liquid pipe 41, the second liquid pipe 42 and the connecting portion 43 are described. FIG. 3 is a schematic plan view depicting the evaporator 10, the first liquid pipe 41, the second liquid pipe 42, and the connecting portion 43, the first vapor pipe 31 and the second vapor pipe 32 of the loop-type heat pipe in accordance with the first embodiment. FIG. 4A is a sectional view exemplifying the first liquid pipe 41 and the second liquid pipe 42 of the loop-type heat pipe in accordance with the first embodiment. FIG. 4B is a sectional view exemplifying the connecting portion 43 of the loop-type heat pipe in accordance with the first embodiment. FIG. 5 is a sectional view exemplifying the evaporator 10 of the loop-type heat pipe in accordance with the first embodiment. In FIG. 3, a metal layer (the metal layer 61 shown in FIGS. 4 A, 4B and 5) that is the outermost layer on one side is not shown. FIG. 4A is a sectional view taken along a line IVa-IVa of FIG. 3. FIG. 4B is a sectional view taken along a line IVb-IVb of FIG. 3. FIG. 5 is a sectional view taken along a line V-V of FIG. 3. In FIGS. 3 to 5, a stacking direction of the metal layers 61 to 66 is denoted as the Z direction, any direction in a plane orthogonal to the Z direction is denoted as the X direction, and a direction in the plane orthogonal to the X direction is denoted as the Y direction (the same also applies to the other drawings). In the present disclosure, the description "as seen from above" means seeing in the Z direction.

As shown in FIGS. 3 and 4A, the first liquid pipe 41 has a first flow path 71. The first flow path 71 is a part of the flow path 51. The first liquid pipe 41 has pipe walls 101 and 102. The pipe walls 101 and 102 are parts of the pipe walls 90. The first flow path 71 is surrounded by an inner wall surface 101A of the pipe wall 101, an inner wall surface 102A of the pipe wall 102, a lower surface 61X of the metal layer 61, and an upper surface 66X of the metal layer 66. The first liquid pipe 41 includes, for example, fourth porous bodies 111 and 112 in the first flow path 71. The fourth porous body 111 is provided in contact with the inner wall surface 101A of the pipe wall 101, and the fourth porous body 112 is provided in contact with the inner wall surface 102A of the pipe wall 102. For example, the fourth porous body 111 is formed integrally with the pipe wall 101, and the fourth porous body 112 is formed integrally with the pipe wall 102. The fourth porous bodies 111 and 112 include, for example, a plurality of pores (not shown) formed in the metal layers 62 to 65.

A space 81 in which the operating fluid C flows is formed between the fourth porous body 111 and the fourth porous body 112. The space 81 is surrounded by surfaces of the fourth porous bodies 111 and 112 facing each other, the lower surface 61X of the metal layer 61, and the upper surface 66X of the metal layer 66.

As shown in FIGS. 3 and 4A, the second liquid pipe 42 has a second flow path 72. The second flow path 72 is a part of the flow path 52. The second liquid pipe 42 has pipe walls 201 and 202. The pipe walls 201 and 202 are parts of the pipe walls 90. The second flow path 72 is surrounded by an inner wall surface 201A of the pipe wall 201, an inner wall surface 202A of the pipe wall 202, the lower surface 61X of the metal layer 61, and the upper surface 66X of the metal layer 66. The second liquid pipe 42 includes, for example, fifth porous bodies 211 and 212 in the second flow path 72. The fifth porous body 211 is provided in contact with the inner wall surface 201A of the pipe wall 201, and the fifth porous body 212 is provided in contact with the inner wall surface 202A of the pipe wall 202. For example, the fifth porous body 211 is formed integrally with the pipe wall 201, and the fifth porous body 212 is formed integrally with the pipe wall 202. The fifth porous bodies 211 and 212 include, for example, a plurality of pores (not shown) formed in the metal layers 62 to 65.

A space 82 in which the operating fluid C flows is formed between the fifth porous body 211 and the fifth porous body 212. The space 82 is surrounded by surfaces of the fifth porous bodies 211 and 212 facing each other, the lower surface 61X of the metal layer 61, and the upper surface 66X of the metal layer 66.

As shown in FIGS. 3 and 4A, the pipe wall 101 is positioned on an outer side of the loop-shaped flow path 51, the pipe wall 102 is positioned on an inner side of the loop-shaped flow path 51, the pipe wall 201 is positioned on an outer side of the loop-shaped flow path 52, and the pipe wall 202 is positioned on an inner side of the loop-shaped flow path 52. For example, the first liquid pipe 41 and the second liquid pipe 42 extend in the Y direction in the vicinity of the evaporator 10. The pipe wall 101 and the pipe wall 201 are adjacent to each other in the X direction at a part where the first liquid pipe 41 and the second liquid pipe 42 extend in the Y direction. The pipe walls 101 and 201 are also connected to each other immediately before a boundary between the first liquid pipe 41 and second liquid pipe 42 and the connecting portion 43.

A first porous body 310 that connects the first flow path 71 and the second flow path 72 each other is provided between the pipe wall 102 and the pipe wall 202 in the connecting portion 43. The first porous body 310 continues to the fourth porous bodies 111 and 112 in the first liquid pipe 41, and continues to the fifth porous bodies 211 and 212 in the second liquid pipe 42. The first porous body 310 fills insides of the connecting portion 43 between the pipe wall 102 and the pipe wall 202, in one section (for example, a section shown in FIG. 4B) perpendicular to the X direction, for example. That is, the first porous body 310 is provided in contact with the inner wall surface 102A of the pipe wall 102, the inner wall surface 202A of the pipe wall 202, the lower surface 61X of the metal layer 61, and the upper surface 66X of the metal layer 66. For example, the first porous body 310 is formed integrally with the pipe walls 101 and 202. The first porous body 310 includes, for example, a plurality of pores (not shown) formed in the metal layers 62 to 65.

In this way, the first liquid pipe 41 is provided with the fourth porous bodies 111 and 112, the second liquid pipe 42 is provided with the fifth porous bodies 211 and 212, and the connecting portion 43 is provided with the first porous body 310 between the pipe wall 102 and the pipe wall 202. Thereby, the capillary force generated in the porous bodies guides the liquid operating fluid C in the first liquid pipe 41 and the second liquid pipe 42 to the evaporator 10.

As a result, even when the vapor Cv intends to flow back in the first liquid pipe 41 and the second liquid pipe 42 due to heat leak from the evaporator 10, for example, the vapor Cv can be pushed and returned by the capillary force acting from the porous body in the connecting portion 43 and the porous bodies in the first liquid pipe 41 and the second liquid pipe 42 to the liquid operating fluid C, so that the vapor Cv can be prevented from flowing back.

As shown in FIGS. 3 and 5, the evaporator 10 has a third flow path 73, a fourth flow path 74, and a partitioning wall 92 configured to partition the third flow path 73 and the fourth flow path 74. The third flow path 73 is connected to the connecting portion 43 and the first vapor pipe 31, and the fourth flow path 74 is connected to the connecting portion 43 and the second vapor pipe 32. The third flow path 73 is a part of the flow path 51, and the fourth flow path 74 is a part of the flow path 52.

The evaporator 10 has pipe walls 401 and 402. The pipe wall 401 continues to the pipe wall 102, and the pipe wall 402 continues to the pipe wall 202. The pipe walls 401 and 402 are parts of the pipe walls 90. One end portion of the partitioning wall 92 is connected to the pipe wall 90 between the first vapor pipe 31 and the second vapor pipe 32. The other end portion of the partitioning wall 92 is connected to the first porous body 310. The partitioning wall 92 has a sidewall surface 93A on the third flow path 73-side, and a sidewall surface 94A on the fourth flow path 74-side. The third flow path 73 is surrounded by an inner wall surface 401A of the pipe wall 401, the sidewall surface 93 A of the partitioning wall 92, the lower surface 61X of the metal layer 61, and the upper surface 66X of the metal layer 66. The fourth flow path 74 is surrounded by an inner wall surface 402A of the pipe wall 402, the sidewall surface 94A of the partitioning wall 92, the lower surface 61X of the metal layer 61, and the upper surface 66X of the metal layer 66.

The evaporator 10 includes, for example, a second porous body 411 having a comb-teeth shape in plan view in the third flow path 73, and a third porous body 412 having a comb-teeth shape in plan view in the fourth flow path 74. The second porous body 411 and the third porous body 412 are arranged spaced from the first porous body 310. The second porous body 411 may also be provided in contact with the inner wall surface 401A of the pipe wall 401, the sidewall surface 93A of the partitioning wall 92, the lower surface 61X of the metal layer 61, and the upper surface 66X of the metal layer 66. The third porous body 412 may also be provided in contact with the inner wall surface 402A of the pipe wall 402, the sidewall surface 93A of the partitioning wall 92, the lower surface 61X of the metal layer 61, and the upper surface 66X of the metal layer 66. For example, the second porous body 411 is formed integrally with the pipe wall 401 and the partitioning wall 92, and the third porous body 412 is formed integrally with the pipe wall 402 and the partitioning wall 92. The second porous body 411 and the third porous body 412 include, for example, a plurality of pores (not shown) formed in the metal layer 62 to 65. Partitioning wall 92 may separate the second porous body 411 and the third porous body 412 from each other.

In the third flow path 73, a region in which the second porous body 411 is not provided is formed with a space 83. The space 83 connects to a fifth flow path 75 of the first vapor pipe 31. The second porous body 411 and the space 83 are arranged between the first liquid pipe 41 and the first vapor pipe 31. In the fourth flow path 74, a region in which the third porous body 412 is not provided is formed with a space 84. The space 84 connects to a sixth flow path 76 of the second vapor pipe 32. The third porous body 412 and the space 84 are arranged between the second liquid pipe 42 and the second vapor pipe 32. In the spaces 83 and 84, the vapor Cv of the operating fluid C flows. The fifth flow path 75 is a part of the flow path 51, and the sixth flow path 76 is a part of the flow path 52.

The operating fluid C is guided from the first porous body 310-side to the evaporator 10, and permeates into the second porous body 411 and the third porous body 412. The operating fluid C permeating into the second porous body 411 and the third porous body 412 in the evaporator 10 is vaporized by heat generated in the heat generation component 120, so that the vapor Cv is generated. A part of the vapor Cv flows into the first vapor pipe 31 through the space 83 in the evaporator 10, and the other part of the vapor Cv flows into the second vapor pipe 32 through the space 84 in the evaporator 10. Note that, in FIG. 3, the number of protrusions (comb teeth) of each of the second porous body 411 and the third porous body 412 is set to four as an example. That is, the number of protrusions (comb teeth) can be set as appropriate. When a contact area between the protrusions and the spaces 83 and 84 increases, the operating fluid C is likely to evaporate and the pressure loss is likely to be reduced. In the first embodiment, a volume of the third flow path 73 is about the same as a volume of the fourth flow path 74, and a contact area between the space 83 and the second porous body 411 is about the same as a contact area between the space 84 and the third porous body 412.

Note that, one or both of the first liquid pipe 41 and the second liquid pipe 42 are formed with an injection port (not shown) for injecting the operating fluid C. The injection port is used to inject the operating fluid C, and is blocked after the operating fluid C is injected. Therefore, the loop-type heat pipe 1 is kept airtight.

In the first embodiment, since the first condenser 21 and the second condenser 22 are provided for one evaporator 10, a heat radiation area is increased, so that the heat applied to the evaporator 10 is likely to be radiated to an outside. In addition, since the evaporator 10 includes the third flow path 73 and the fourth flow path 74 partitioned by the partitioning wall 92, the third flow path 73 is connected to the connecting portion 43 and the first vapor pipe 31 and the fourth flow path 74 is connected to the connecting portion 43 and the second vapor pipe 32, the operating fluid C stably flows in each of the flow paths 51 and 52. In addition, since the first porous body 310 connecting the first flow path 71 and the second flow path 72 each other is provided, the operating fluid C flowing through the first flow path 71 and the operating fluid C flowing through the second flow path 72 join and are supplied to the evaporator 10 via the first porous body 310. Therefore, the liquid operating fluid C can be continuously stably supplied to the evaporator 10. That is, according to the first embodiment, it is possible to efficiently radiate the heat while suppressing dryout.

Note that, the porous bodies may also be provided in parts of the first condenser 21 and the second condenser 22, or may also be provided in parts of the first vapor pipe 31 and the second vapor pipe 32.

### <Second Embodiment>

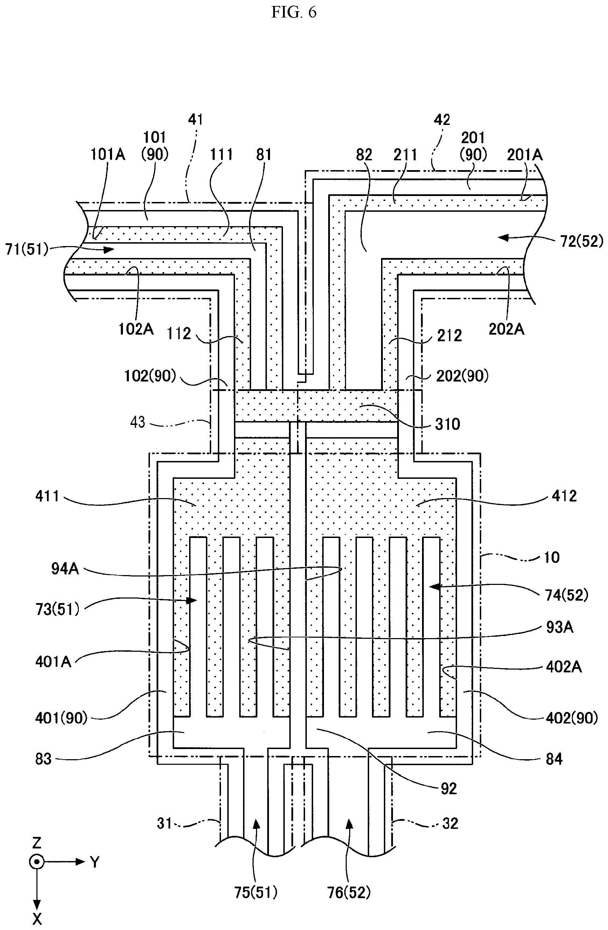

In a second embodiment, the configuration of the evaporator 10 is different from the first embodiment. In the second embodiment, the descriptions of the same constitutional parts as the above-described embodiment may be omitted. FIG. 6 is a schematic plan view depicting the evaporator 10, the first liquid pipe 41, the second liquid pipe 42, the connecting portion 43, the first vapor pipe 31 and the second vapor pipe 32 of a loop-type heat pipe in accordance with the second embodiment. In FIG. 6, the metal layer (the metal layer 61 shown in FIGS. 4A, 4B and 5) that is the outermost layer on one side is not shown.

In the second embodiment, the second condenser 22 is arranged in an environment where it can radiate heat more easily than the first condenser 21. For example, the second condenser 22 is arranged in a larger area than the first condenser 21 or a cooling fan is arranged in the vicinity of the second condenser 22. A sectional area of the sixth flow path 76 is greater than a sectional area of the fifth flow path 75, as a whole. For example, as shown in FIG. 6, a sectional area and a width of the sixth flow path 76 at a boundary with the fourth flow path 74 are greater than a sectional area and a width of the fifth flow path 75 at a boundary with the third flow path 73. A volume of the fourth flow path 74 is greater than a volume of the third flow path 73, and a contact area between the space 84 and the third porous body 412 is greater than a contact area between the space 83 and the second porous body 411. For example, a distance between the inner wall surface 402A and the sidewall surface 94A is greater than a distance between the inner wall surface 401A and the sidewall surface 93A. A sectional area of the second flow path 72 at a boundary with the fourth flow path 74 is greater than a sectional area of the first flow path 71 at a boundary with the third flow path 73.

The other configurations are similar to the first embodiment.

Also in the second embodiment, the similar effects to the first embodiment can be achieved. In addition, the second condenser 22 is arranged in an environment where it can radiate heat more easily than the first condenser 21, and the flow path 52 can cause more operating fluid C to flow than the flow path 51. Therefore, it is possible to obtain the more excellent heat radiation performance.

Note that, the number of the condensers is not limited to two. For example, three or more condensers may be connected to the evaporator via the vapor pipe and the liquid pipe.

Although the preferred embodiments have been described in detail, the present disclosure is not limited to the above-described embodiments and the embodiments can be diversely modified and replaced without departing from the scope defined in the claims.

## Claims

1. A loop-type heat pipe (1) comprising:
an evaporator (10) configured to vaporize an operating fluid;
a first condenser (21) and a second condenser (22) configured to condense the operating fluid;
a first liquid pipe (41) having a first flow path (81) and configured to connect the evaporator (10) and the first condenser (21);
a second liquid pipe (42) having a second flow path (82) and configured to connect the evaporator (10) and the second condenser (22);
a first vapor pipe (31) configured to connect the evaporator (10) and the first condenser (21); and
a second vapor pipe (32) configured to connect the evaporator (10) and the second condenser (22);
wherein the evaporator (10) has:
a third flow path (83) connected to the first liquid pipe (41) and the first vapor pipe (31), and
a fourth flow path (84) connected to the second liquid pipe (42) and the second vapor pipe (32),
**characterized in that**
the loop-type heat pipe (1) comprises a connecting portion (43) configured to connect the first liquid pipe (41) and second liquid pipe (42) to the evaporator (10), wherein the connecting portion (43) has a first porous body (310) configured to connect the first flow path (81) and the second flow path (82), and
the evaporator (10) has a partitioning wall (92) configured to partition the third flow path (83) and the fourth flow path (84).

2. The loop-type heat pipe according to Claim 1, wherein both the operating fluid flowing through the first flow path (81) in the first liquid pipe (41) and the operating fluid flowing through the second flow path (82) in the second liquid pipe (42) flow into the evaporator (10) via the first porous body (310) in the connecting portion (43).

3. The loop-type heat pipe according to Claim 1 or 2, wherein the third flow path (83) has a second porous bod (411) arranged spaced from the first porous body (310), and
wherein the fourth flow path (84) has a third porous body (412) arranged spaced from the first porous body (310).

4. The loop-type heat pipe according to one of Claims 1 to 3, wherein the first liquid pipe (41) has a fourth porous body (111, 112) continuing to the first porous body (310), and
wherein the second liquid pipe (42) has a fifth porous body (211, 212) continuing to the first porous body (310).

5. The loop-type heat pipe according to one of Claims 1 to 4, wherein each of the evaporator (10), the first condenser (21), the second condenser (22), the first liquid pipe (41), the second liquid pipe (42), the first vapor pipe (31), the second vapor pipe (32) and the connecting portion (43) is constituted by a plurality of stacked metal layers (61 to 66).

6. The loop-type heat pipe according to one of Claims 1 to 5, wherein a volume of the fourth flow path (84) is greater than a volume of the third flow path (83),
wherein the first vapor pipe (31) has a fifth flow path (75) configured to communicate with the third flow path (83),
wherein the second vapor pipe (32) has a sixth flow path (76) configured to communicate with the fourth flow path (84), and
wherein a sectional area of the sixth flow path (76) is greater than a sectional area of the fifth flow path (75).

## Patentansprüche

1. Kreislaufwärmerohr (1), aufweisend:
einen Verdampfer (10), der derart konfiguriert ist, dass er ein Arbeitsfluid verdampft;
einen ersten Kondensator (21) und einen zweiten Kondensator (22), derart konfiguriert, um das Arbeitsfluid zu kondensieren;
ein erstes Flüssigkeitsrohr (41), das einen ersten Strömungspfad (81) aufweist und derart konfiguriert ist, dass es den Verdampfer (10) und den ersten Kondensator (21) verbindet;
ein zweites Flüssigkeitsrohr (42), das einen zweiten Strömungspfad (82) aufweist und derart konfiguriert ist, dass es den Verdampfer (10) und den zweiten Kondensator (22) miteinander verbindet;
ein erstes Dampfrohr (31), derart konfiguriert, um den Verdampfer (10) und den ersten Kondensator (21) zu verbinden; und
ein zweites Dampfrohr (32), derart konfiguriert, um den Verdampfer (10) und den zweiten Kondensator (22) zu verbinden;
wobei der Verdampfer (10) aufweist:
einen dritten Strömungspfad (83), der mit dem ersten Flüssigkeitsrohr (41) und dem ersten Dampfrohr (31) verbunden ist, und
einen vierten Strömungspfad (84), der mit dem zweiten Flüssigkeitsrohr (42) und dem zweiten Dampfrohr (32) verbunden ist,
**dadurch gekennzeichnet, dass**
das Kreislaufwärmerohr (1) einen Verbindungsabschnitt (43) umfasst, der derart konfiguriert ist, dass er das erste Flüssigkeitsrohr (41) und das zweite Flüssigkeitsrohr (42) mit dem Verdampfer (10) verbindet, wobei der Verbindungsabschnitt (43) einen ersten porösen Körper (310) aufweist, der derart konfiguriert ist, dass er den ersten Strömungspfad (81) und den zweiten Strömungspfad (82) verbindet, und
der Verdampfer (10) eine Trennwand (92) aufweist, die derart konfiguriert ist, dass sie den dritten Strömungspfad (83) und den vierten Strömungspfad (84) trennt.

2. Kreislaufwärmerohr nach Anspruch 1, wobei sowohl das Arbeitsfluid, das durch den ersten Strömungspfad (81) im ersten Flüssigkeitsrohr (41) fließt, als auch das Arbeitsfluid, das durch den zweiten Strömungspfad (82) im zweiten Flüssigkeitsrohr (42) fließt, über den ersten porösen Körpers (310) im Verbindungsabschnitt (43) in den Verdampfer (10) fließt.

3. Kreislaufwärmerohr nach Anspruch 1 oder 2, wobei der dritte Strömungspfad (83) einen zweiten porösen Körper (411) aufweist, der beabstandet vom ersten porösen Körper (310) angeordnet ist, und
wobei der vierte Strömungspfad (84) einen dritten porösen Körper (412) aufweist, der beabstandet von dem ersten porösen Körper (310) angeordnet ist.

4. Kreislaufwärmerohr nach einem der Ansprüche 1 bis 3, wobei das erste Flüssigkeitsrohr (41) einen vierten porösen Körper (111, 112) aufweist, der sich an den ersten porösen Körper (310) anschließt, und
wobei das zweite Flüssigkeitsrohr (42) einen fünften porösen Körper (211, 212) aufweist, der sich an den ersten porösen Körper (310) anschließt.

5. Kreislaufwärmerohr nach einem der Ansprüche 1 bis 4, wobei der Verdampfer (10), der erste Kondensator (21), der zweite Kondensator (22), das erste Flüssigkeitsrohr (41), das zweite Flüssigkeitsrohr (42), das erste Dampfrohr (31), das zweite Dampfrohr (32) und der Verbindungsabschnitt (43) jeweils aus einer Vielzahl von übereinanderliegenden Metallschichten (61 bis 66) gebildet sind.

6. Kreislaufwärmerohr nach einem der Ansprüche 1 bis 5, wobei ein Volumen des vierten Strömungspfades (84) größer ist als ein Volumen des dritten Strömungspfades (83),
wobei das erste Dampfrohr (31) einen fünften Strömungspfad (75) aufweist, der derart konfiguriert ist, dass er mit dem dritten Strömungspfad (83) in Verbindung steht,
wobei das zweite Dampfrohr (32) einen sechsten Strömungspfad (76) aufweist, der derart konfigurierten ist, dass er mit dem vierten Strömungspfad (84) in Verbindung steht, und
wobei eine Querschnittsfläche des sechsten Strömungspfads (76) größer ist als eine Querschnittsfläche des fünften Strömungspfads (75).

## Revendications

1. Tube de chauffe de type boucle (1) comprenant :
un évaporateur (10) configuré pour vaporiser un fluide de fonctionnement ;
un premier condenseur (21) et un second condenseur (22) configurés pour condenser le fluide de fonctionnement ;
un premier tube de liquide (41) ayant une première trajectoire d'écoulement (81) et configuré pour raccorder l'évaporateur (10) et le premier condenseur (21) ;
un second tube de liquide (42) ayant une seconde trajectoire d'écoulement (82) et configuré pour raccorder l'évaporateur (10) et le second condenseur (22) ;
un premier tube de vapeur (31) configuré pour raccorder l'évaporateur (10) et le premier condenseur (21) ; et
un second tube de vapeur (32) configuré pour raccorder l'évaporateur (10) et le second condenseur (22) ;
dans lequel l'évaporateur (10) présente :
une troisième trajectoire d'écoulement (83) raccordée au premier tube de liquide (41) et au premier tube de vapeur (31), et
une quatrième trajectoire d'écoulement (84) raccordée au second tube de liquide (42) et au second tube de vapeur (32),
**caractérisé en ce que**
le tube de chauffe de type boucle (1) comprend une portion de raccord (43) configurée pour raccorder les premier tube de liquide (41) et second tube de liquide (42) à l'évaporateur (10), dans lequel la portion de raccord (43) présente un premier corps poreux (310) configuré pour raccorder la première trajectoire d'écoulement (81) et la seconde trajectoire d'écoulement (82), et
l'évaporateur (10) présente une paroi de division (92) configurée pour diviser la troisième trajectoire d'écoulement (83) et la quatrième trajectoire d'écoulement (84).

2. Tube de chauffe de type boucle selon la revendication 1, dans lequel à la fois le fluide de fonctionnement s'écoulant à travers la première trajectoire d'écoulement (81) dans le premier tube de liquide (41) et le fluide de fonctionnement s'écoulant à travers la seconde trajectoire d'écoulement (82) dans le second tube de liquide (42) s'écoulent dans l'évaporateur (10) via le premier corps poreux (310) dans la portion de raccord (43).

3. Tube de chauffe de type boucle selon la revendication 1 ou 2, dans lequel la troisième trajectoire d'écoulement (83) présente un second corps poreux (411) disposé à distance du premier corps poreux (310), et
dans lequel la quatrième trajectoire d'écoulement (84) présente un troisième corps poreux (412) disposé à distance du premier corps poreux (310).

4. Tube de chauffe de type boucle selon l'une des revendications 1 à 3, dans lequel le premier tube de liquide (41) présente un quatrième corps poreux (111, 112) continuant jusqu'au premier corps poreux (310), et
dans lequel le second tube de liquide (42) présente un cinquième corps poreux (211, 212) continuant jusqu'au premier corps poreux (310).

5. Tube de chauffe de type boucle selon l'une quelconque des revendications 1 à 4, dans lequel chacun de l'évaporateur (10), du premier condenseur (21), du second condenseur (22), du premier tube de liquide (41), du second tube de liquide (42), du premier tube de vapeur (31), du second tube de vapeur (32) et de la portion de raccord (43) est constitué de plusieurs couches de métal empilées (61 à 66).

6. Tube de chauffe de type boucle selon l'une quelconque des revendications 1 à 5, dans lequel un volume de la quatrième trajectoire d'écoulement (84) est supérieur à un volume de la troisième trajectoire d'écoulement (83),
dans lequel le premier tube de vapeur (31) présente une cinquième trajectoire d'écoulement (75) configurée pour communiquer avec la troisième trajectoire d'écoulement (83),
dans lequel le second tube de vapeur (32) présente une sixième trajectoire d'écoulement (76) configurée pour communiquer avec la quatrième trajectoire d'écoulement (84), et
dans lequel une surface transversale de la sixième trajectoire d'écoulement (76) est supérieure à une surface transversale de la cinquième trajectoire d'écoulement (75).
